# EUROPÄISCHE PATENTSCHRIFT

(11) **EP 1 139 217 B1**
(45) Veröffentlichungstag und Bekanntmachung des Hinweises auf die Patenterteilung: **07.06.2006**
(21) Anmeldenummer: 01102386.8
(22) Anmeldetag: 02.02.2001
(51) Int. Cl.: G06F 9/445

(54) **Verfahren zur Abspeicherung von Daten**
Method for storing data
Méthode pour stocker des données

(30) Priorität: 14.03.2000 DE 10012272
(43) Veröffentlichungstag der Anmeldung: 04.10.2001
(73) Patentinhaber: DaimlerChrysler AG, 70567 Stuttgart (DE)
(72) Erfinder: Dorner, Jürgen, 73101 Aichelberg (DE); Heising, Thomas, 71540 Murrhardt (DE); Konietzny, Gerd, 70619 Stuttgart (DE)

(56) Entgegenhaltungen:
- DE-A- 3 624 456
- DE-A- 19 620 885
- DE-A- 19 750 364
- DE-A- 19 750 372
- US-A- 5 442 553
- US-A- 5 521 588
- US-A- 5 826 205

## Beschreibung

Die Erfindung betrifft ein Verfahren zur Abspeicherung von Daten in rechnergestützten Geräten von Verkehrsmitteln, insbesondere in Kraftfahrzeugen, gemäß dem Oberbegriff des Patentanspruchs 1.

Das nachfolgende Verfahren dient dazu, rechnergestützte Geräte in fertiggestellten und in ausgelieferten Fahrzeugen, auf den neuesten Softwarestand zu bringen oder ausgetauschte Geräte mit Betriebs-Software zu versorgen, bzw. einen abgespeicherten Parameterstand für das Fahrzeug und das Gerät zu aktualisieren. Dazu werden die neue Betriebssoftware sowie spezifische Parameter des Fahrzeuges, des Herstellers oder Parameter des Aufbauherstellers per Telekommunikation in den nichtflüchtigen Datenspeicher des rechnergestützten Gerätes geschrieben und dabei gespeicherte, veraltete Daten überschrieben. Der Vorgang der Aktualisierung von Software und/oder Parametern in einem nichtflüchtigen Datenspeicher durch Überschreiben von gespeicherten Daten ist dem Fachmann unter dem Begriff "Flashen" bekannt.

Als nichtflüchtige Datenspeicher für derartige Geräte werden überschreibbare EEPROMs und alternativ dazu Flash-RAMs verwendet. Bekannt ist die Abspeicherung von aktualisierten Daten von Fahrzeug-Steuergeräten in einem Flash-RAM. Die Daten sind dabei jeweils während einer vorangehenden Betriebsphase des Fahrzeuges in dem Fahrzeug erfasst worden und werden vor dem Abschalten des Steuergerätes in dem Flash-RAM für eine Wiederverwendung beim Einschalten des Steuergerätes abgespeichert (DE 197 40 525 C1).

In der DE 696 02 693 T2 wird eine Motorsteuerung zum Überschreiben eines Programms oder Daten in einem nichtflüchtigen Speicher eines Motorreglers offenbart. Der Schwerpunkt dieser Erfindung liegt darin, das Überschreiben zu initiieren während die Maschine angetrieben wird. Die Information, dass ein Programm oder Daten überschrieben werden sollen, ist in einem separaten Speichereinheit abgelegt.

In der DE 197 55 686 A1 ist ein Fahrzeugmanagementsystem offenbart, bei welchem fahrzeugseitige Vorgaben und von einer Leitstelle befohlene Vorgaben für z.B. die Kraftstoffeinspritzung, die Klimatisierung, die Geschwindigkeit usw. gleichermaßen berücksichtigt werden können. Über eine zentrale Steuereinheit des Fahrzeugs, die auch Verbindung mit einer Leitstelle aufnehmen kann, können Parameter an den verbundenen Steuergeräten verändert werden.

Die US 5521588 beschreibt ein Verfahren zum Abspeichern von Daten in rechnergestützten Geräten von Verkehrsmitteln, wobei die Geräte einen Datenspeicher zur Abspeicherung von Betriebssoftware und/oder Fahrzeugdaten aufweisen. In den fertig gestellten Fahrzeugen wird mittels einer Programm-Routine überprüft, ob sich bei den Geräten in der Hardware oder Software etwas geändert hat. Bei Änderungen wird ein Datenpaket in einen Datenspeicher geladen.

Die DE 196 20 885 A1 offenbart ein Verfahren zum Aktualisieren von Daten eines Steuergerätes in einem Fahrzeug. Die Daten werden per Funk von einer Zentrale zusammen mit einer fahrzeugindividuellen Kennung übertragen und in die Steuergeräte geschrieben.

Aufgabe der Erfindung ist es ein Verfahren zum automatischen Flashen von rechnergestützten Geräten in Fahrzeugen zu schaffen, mit dem in fertiggestellten und in ausgelieferten Fahrzeugen abgespeicherte Betriebs-Software und/oder Parameter unabhängig vom Standort des Fahrzeuges per Telekommunikation aktualisiert werden.

Diese Aufgabe wird erfindungsgemäß durch die Merkmale des Patentanspruchs 1 gelöst. Weiterbildungen der Erfindung sind in den Unteransprüchen angegeben.

Die Ausgangssituation für die erfindungsgemäße Lösung ist ein voll funktionsfähiges Fahrzeug - ein Pkw, Nfz oder sonstige mobile Einheiten - mit mehreren rechnergestützten Geräten inklusive ihrer abgespeicherten Software und Daten, insbesondere Fahrzeugparameter. Die erfindungsgemäße Lösung ist anwendbar auf rechnergestützte, diagnosefähige Geräte, insbesondere auf Steuergeräte des Fahrzeuges, die einen überschreibbaren, nichtflüchtigen Datenspeicher von ausreichender Speichergröße aufweisen. Im Zusammenhang mit einer separaten Pufferbatterie kann aber auch ein flüchtiger Speicher verwendet werden, der dann trotz abgeklemmter Fahrzeugbatterie die gespeicherten Daten in einem Steuergerät über lange Zeit gespeichert halten kann. Als Speicher kommen bspw. ein Flash-RAM oder ein schneller Schreib-Lese-Permanentszeicher in Frage. Weiterhin ist es für die erfindungsgemäße Lösung sinnvoll, eine elektronische Zentraleinheit in dem Fahrzeug zu haben, über die sämtliche rechnergestützten Geräte des Fahrzeuges miteinander kommunizieren. Diese Zentraleinheit kann ein Datenbus-System und/oder ein Gateway-Modul sein.

In der Zentraleinheit ist ein Grundmodul aufgenommen. Es beinhaltet neben einer Programm-Routine zum Flashen unter anderem die gesamte Spannungsversorgung und die Absicherung dieser Versorgung, die Datenkommunikation - z.B. ein Gateway - und einige Subsysteme, wie z.B. einen zentralen Datenspeicher ZDS und davon einen Speicherbereich, der als Programm-Pufferspeicher PCB wirkt.

Die erfindungsgemäße Übertragung der aktualisierten Software und/oder Daten, insbesondere der Fahrzeugparameter, von einer stationären Umgebung an das Fahrzeug kann mittels beliebiger Informationsübertragungsverfahren erfolgen - z.B. mittels Handy, Satellit, Richtfunk oder Internet oder auch direkt per Diagnoseverbindung via Laptop/PC oder über eine integrierte Laptop-/PC-Schnittstelle.

Die Programm-Routine überprüft beim "Power On" während des Startens des Fahrzeuges durch Vergleich, ob ein Zugriff vom Werk oder Kundendienst erfolgte. Ist ein derartiger Eingriff erfolgt, dann wird entweder der komplette zentrale Datenspeicher ZDS oder ein Teil davon mit neuen Daten bzw. Parametern geladen. Ist das Parameterladen im Werk oder im Kundendienst erfolgreich beendet, werden je nach Produktions-/Reparaturfortschritt sukzessive sämtliche im Fahrzeug hinzukommenden oder befindlichen Steuergeräte SG automatisch oder durch manuelle Aktivierung und optischer Rückmeldung nachparametriert bzw. auf den neusten Stand gebracht.

Ist nach dem "Power On" das Fahrzeug nicht im Werks-Mode, so wird überprüft, ob sich an den rechnergestützten Geräten - und an ihrer Software oder Parameterbelegung etwas geändert hat. Eine daraus resultierende Notwendigkeit für ein Flashen der Geräte erfolgt nach einer von der Routine gesteuerten Überprüfung, ob das Fahrzeug sicher abgestellt ist.

Per Telekommunikation übertragene, aktualisierte Software oder Parameter werden während der Fahrt zunächst zwischengespeichert und später bei sicher abgestelltem Fahrzeug in die Steuergeräte geflasht. Bei einem Flash-Vorgang wird der alte Software- und Parameterzustand von der Routine für weitere Fahr-Kilometer - etwa 100 km - gesichert und kann bei Problemen wieder in die Steuergeräte zurückgeflasht werden. Nach Ablauf dieser festgelegten Fahr-Kilometer-Distanz kann der alte Datenbestand gelöscht werden.

Die Lebenslaufdaten des Grundmoduls sind in einem räumlich getrennten Spiegelspeicher abgebildet, der außerhalb der Zentraleinheit im Fahrzeug angeordnet ist. Falls aus irgend einem Grund das Grundmodul oder ein System welches den Spiegelspeicher beinhaltet getauscht wird, so kann mit der Programm-Routine festgestellt werden, was getauscht wurde. Bei einem Tausch des Grundmodules können bei einem vorhandenen Diagnosebus sämtliche Daten der rechnergestützten Geräte von den Geräten aus wieder in das Grundmodul eingelesen werden, somit ist das Grundmodul mit den Lebenslaufdaten aus dem Spiegelspeicher wieder voll funktionsfähig im Fahrzeug.

Die erfindungsgemäße Lösung bietet über die per Telekommunikation erfolgende Aktualisierung der Software bei gleichbleibender Hardware eine kostengünstige und komfortable Möglichkeit zu einer nachträglichen Komfortverbesserung am Fahrzeug, ohne dass das Fahrzeug dazu in eine Werkstatt gebracht werden muß. Ein weiterer Vorteil liegt darin, dass das erfindungsgemäße Flashen weltweit durchführbar ist und somit den Erfordernissen eines globalen Fahrzeugmarktes in idealer Weise entspricht. Der Austausch von Software und/oder Parametern ist über das erfindungsgemäße Flashen flexibel und vorselektiert durchführbar.

Fahrzeuge - oder Produkte für Fahrzeuge - die das Werk verlassen sind üblicherweise erfasst und dokumentiert. Fahrzeuge und Produkte, die beim Kunden in Gebrauch sind, können irgendwelchen Produktänderungen unterliegen. Diese sind nicht immer eindeutig zu erfassen. Über eine Informationsplattform können im Rahmen der erfindungsgemäßen Lösung die augenblicklichen Dokumentationsdaten der diagnosefähigen Geräte des Fahrzeuges während der Fahrt zurückgelesen und damit im Werk dokumentiert werden.

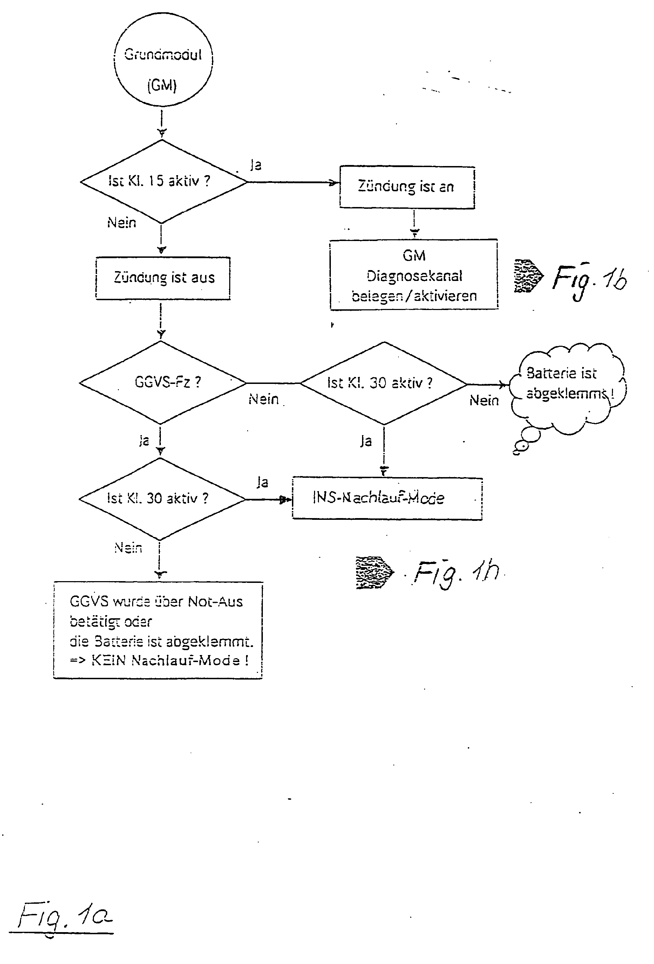

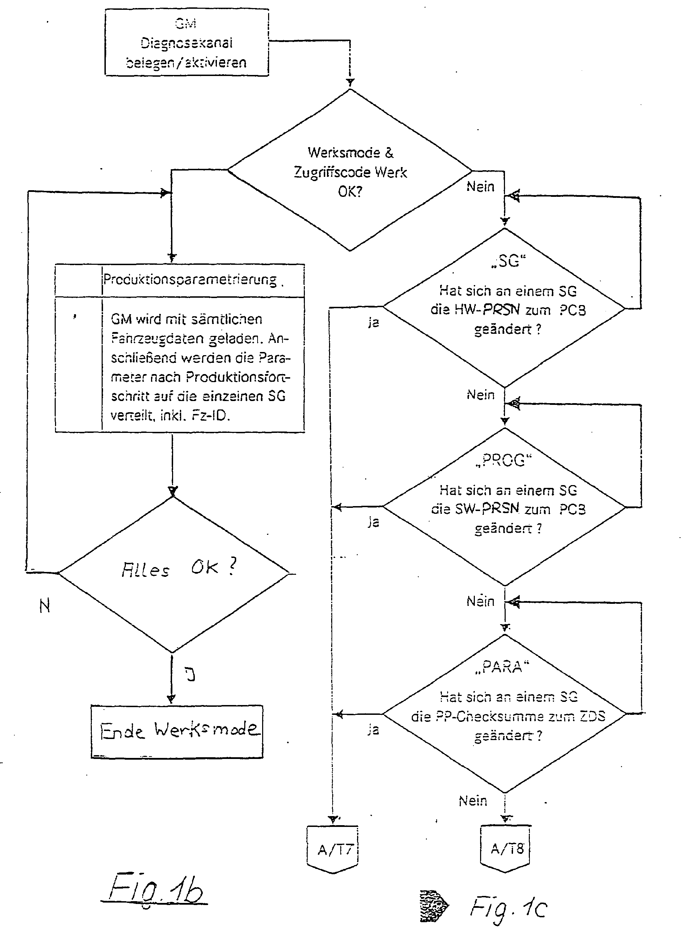

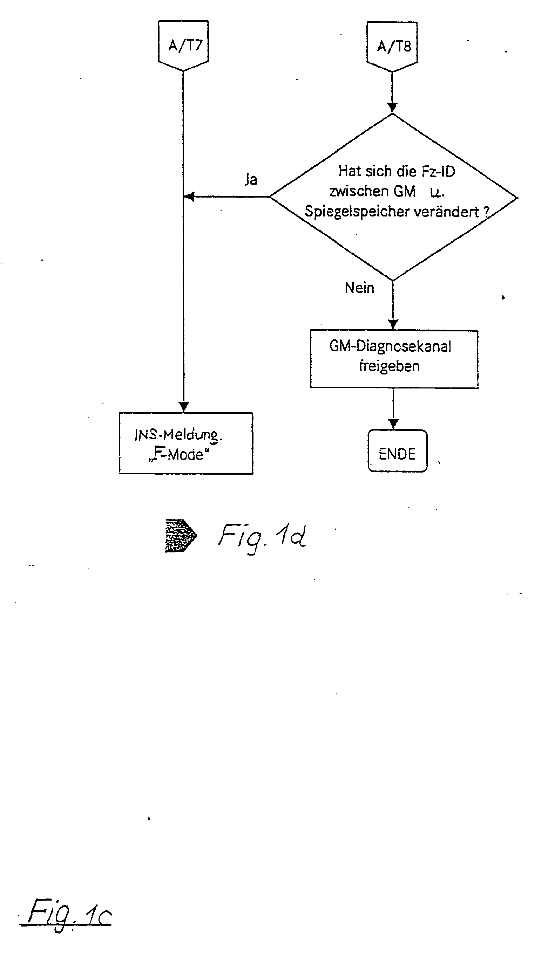

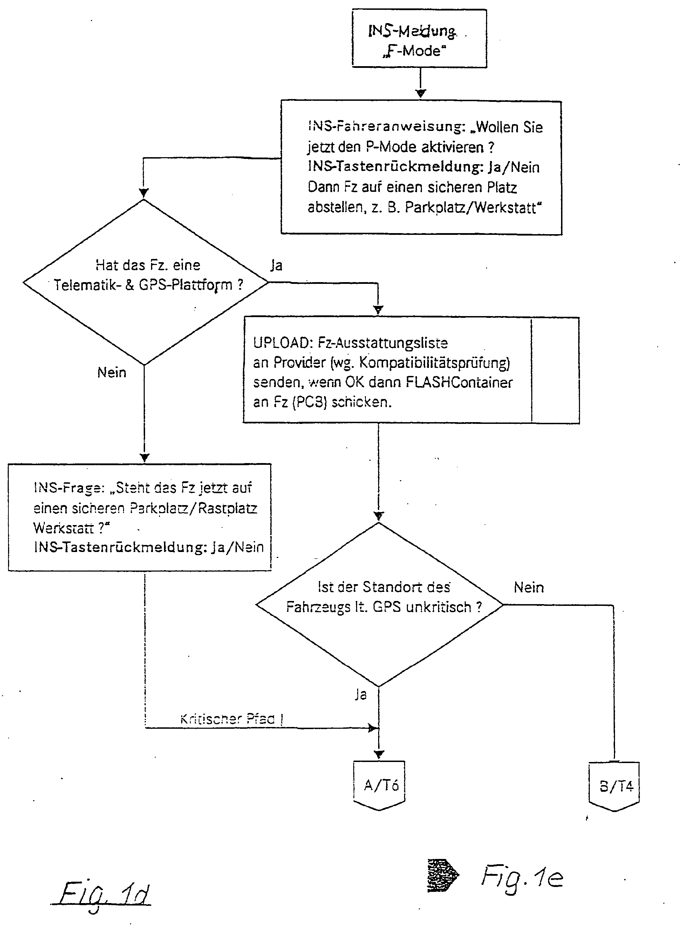

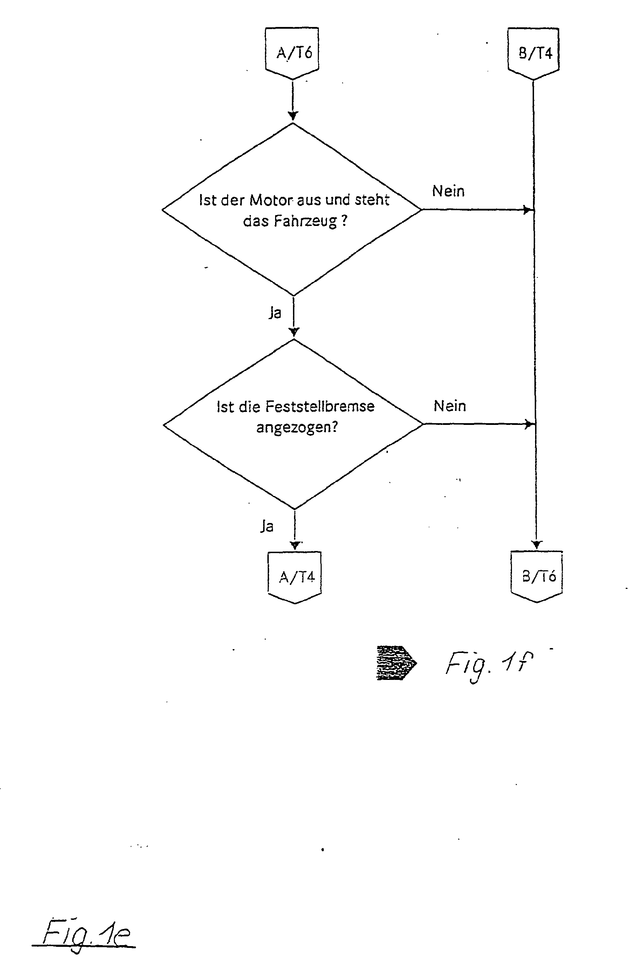

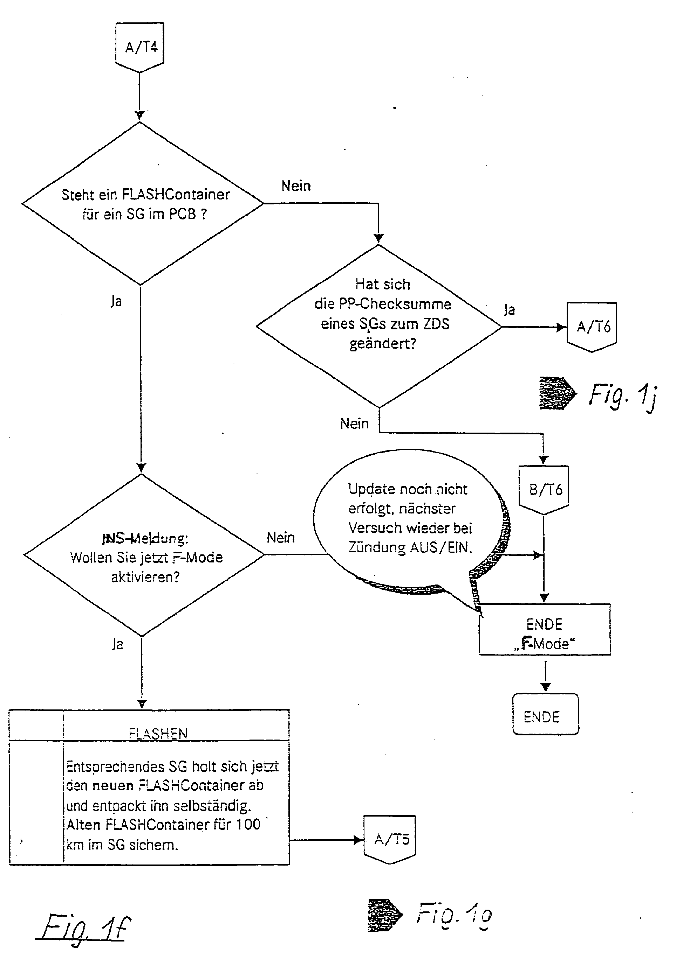

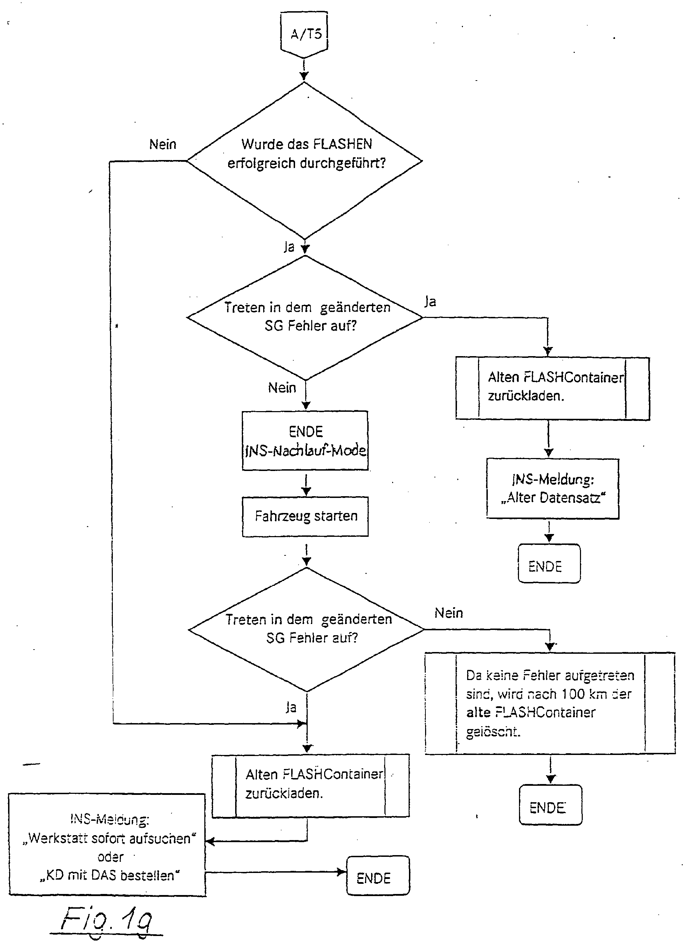

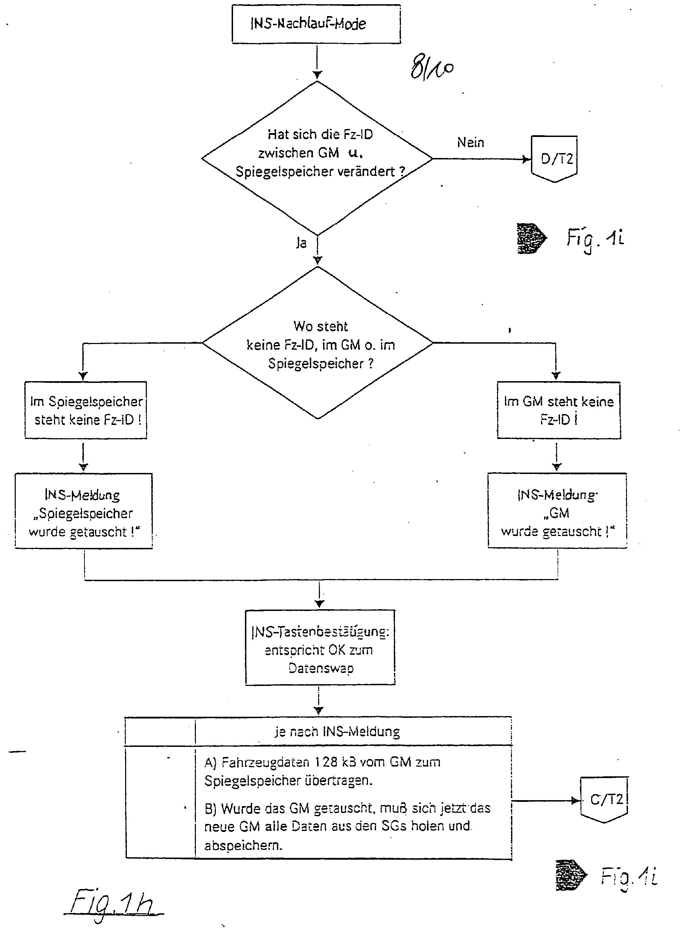

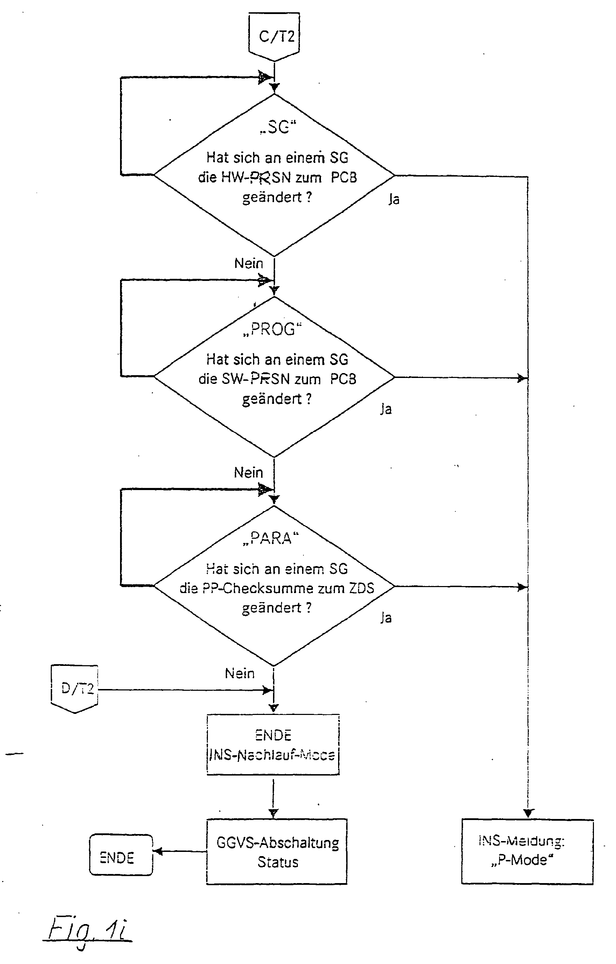

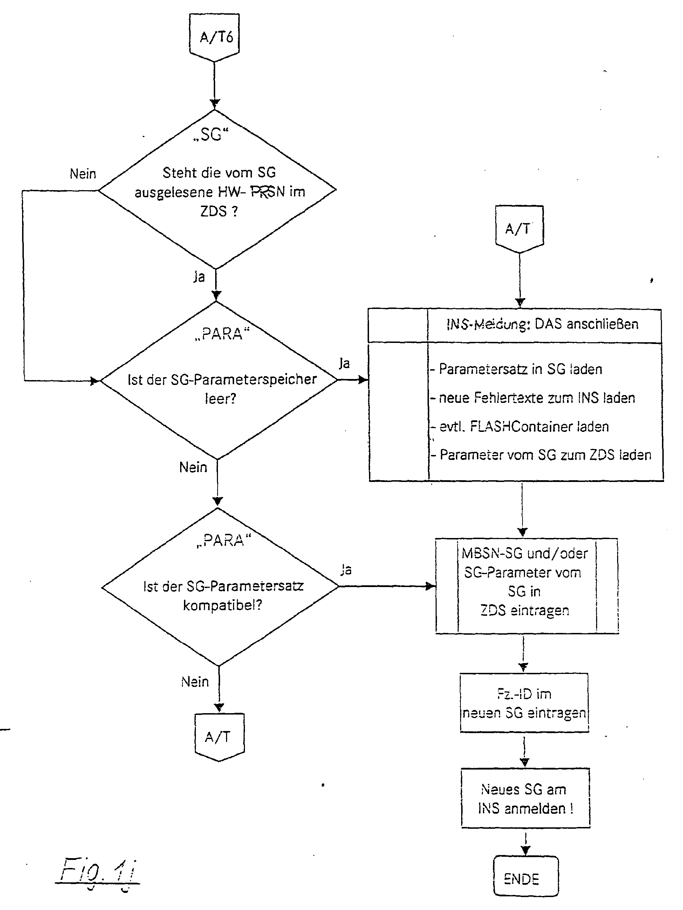

Anhand der Zeichnung wird im Folgenden ein Ausführungsbeispiel der Erfindung näher beschrieben. Fig.1a bis Fig. 1j zeigen ein komplettes Ablaufdiagramm einer Programm-Routine zur automatischen Steuerung des Flashens.

In Fig. 1a startet die Routine mit einer Überprüfung der Spannung von Klemme 15 ob die Zündung eingeschaltet ist. Für den Fall, dass die Zündung eingeschaltet ist - Stellung "1" am Zündschloss -, wird von der Routine ein Diagnosekanal im Grundmodul aktiviert.

Ist die Zündung nicht eingeschaltet, überprüft die Routine, ob es sich um ein GGVS-Fahrzeug handelt. GGVS bedeutet in diesem Zusammenhang Gefahrgutverordnung Straße. Wenn ja, wird Klemme 30 - Kl.30 - überprüft, die eine Spannung von 12V, 24 V oder 48V bei angeschlossener Batterie führt, wenn nicht das in diesen Fahrzeugen standardmäßig vorhandene GGVS-Modul über ein "Not-Aus" aktiviert worden ist. Die Überprüfung auf den GGVS-Status ist in dem hier beschriebenen Ausführungsbeispiel optional enthalten. Die Routine kann von dem Fachmann bei Bedarf auch ohne diese Überprüfung ausgelegt werden, ohne dass dies hier näher beschrieben ist.

Bei abgeschalteter Zündung und aktiver Klemme 30 wird unabhängig davon, ob es sich um ein GGVS-Fahrzeug handelt, an den Geräten ein Nachlauf-Mode - INS-Nachlauf-Mode - aktiviert. Mit dem INS-Nachlauf-Mode werden in bekannter Weise die rechnergestützten Geräte beim Abschalten der Zündung nicht sofort von der Spannung abgeschaltet, sondern sie laufen für einige Zeit nach. Sie schalten sich erst dann selbsttätig ab, wenn sie gewisse Echtzeit-Parameter RTP abgespeichert haben. Damit wird beim Einschalten der Zündung immer der richtige Ausgangszustand der Steuergeräte SG erreicht. Erfindungsgemäß ist dieser INS-Nachlauf-Mode um eine Überprüfung ergänzt, mit der geklärt wird, ob eine Reparatur am Fahrzeug ausgeführt worden ist; Fig. 1h.

Fig.1b und Fig.1c zeigen die bei eingeschalteter Zündung erfolgende Aktivierung des Diagnose-Kanals im Grundmodul. Zunächst wird dabei überprüft, ob der Werksmode und der Zugriffscode des Werkes auf OK gesetzt ist. Für Fahrzeuge im Werk mit gesetztem Zugriffscode erfolgt die übliche Produktionsparametrierung, wobei die Steuergeräte SG entsprechend dem Produktionsfortschritt mit sämtlichen Fahrzeugdaten aus dem zentralen Datenspeicher ZDS geladen werden. Die nachstehende Beschreibung und das Ablaufdiagramm beziehen sich auf Steuergeräte SG, obwohl die erfindungsgemäße Lösung für den Fachmann erkennbar nicht auf Steuergeräte beschränkt ist, sondern allgemein auf rechnergestützte Geräte in Fahrzeugen oder sonstigen mobilen Einheiten anwendbar ist.

Für ausgelieferte Fahrzeuge wird im Diagnosekanal anhand einer Produzenten-Sachnummer für die Hardware HW-PRSN zunächst überprüft, ob sich die Hardware der Steuergeräte SG gegenüber der HW-PRSN im ZDS geändert hat. Ist diese unverändert, so wird anhand einer Produzenten-Sachnummer für Software SW-PRSN die Software ebenso überprüft. Liegt keine Änderung vor werden die abgespeicherten Parameter PP anhand einer Checksumme gegen den zentralen Datenspeicher ZDS geprüft und wenn auch dort keine Änderung vorliegt, erfolgt noch eine Überprüfung darauf, ob sich der Fahrzeug-Identitätscode Fz-ID gegenüber dem zentralen Datenspeicher ZDS des Grundmodules GM oder gegenüber dem außerhalb des Grundmodules GM angeordneten Spiegelspeicher - in denen sich auch die Lebenslaufdaten des GMs befinden - geändert hat. Wenn bei den vorangehend beschriebenen Prüfungen keine Änderungen registrierbar sind, wird der Diagnosekanal im Grundmodul wieder freigegeben. Alternativ kann zur Erhöhung der Redundanz auch mehr als ein Spiegelspeicher für das Grundmodul im Fahrzeug vorgesehen sein.

Wird aber eine Änderung registriert, so erscheint eine Instrumentenmeldung, dass die Programmroutine mit dem Flash-Mode beginnt. Fig. 1d zeigt den Einstieg in den Flash-Mode; im Ablaufdiagramm abgekürzt als "F-Mode" bezeichnet. Nachdem der Fahrer abhängig von seiner Fahrsituation dem Flash-Mode grundsätzlich zugestimmt hat, wird geklärt, ob das Fahrzeug mit Mitteln zur Telekommunikation und einem Satellitennavigationssystem GPS ausgestattet ist. Wenn dieser Fall vorliegt, wird eine aktuelle Fahrzeug-Ausstattungsliste per Telekommunikation über das Internet bei einem dafür vom Werk vorgesehenen Provider und bei Kompatibilität vom Provider ein Datenpaket - in den Figuren als "FLASHContainer" bezeichnet - , das die Software und Firmware für das jeweilige Steuergerät SG in komprimierter Form enthält, an den Programm-Pufferspeicher PCB des Grundmodules GM gesendet. Die Parameter PP sind in dem Datenpaket nicht zwingend enthalten. Die voranstehend vorgeschlagene Internet-Telekommunikationsverbindung, kann von dem Fachmann durch beliebig andere geeignete Telekommunikationsverbindungen ersetzt werden.

Vor dem eigentlichen Flashen wird noch per Satellitennavigationssystem GPS geprüft, ob der augenblickliche Fahrzeugstandort unkritisch ist. Wenn das Fahrzeug kein Satellitennavigationssystem GPS aufweist, wird die Sicherheit des Fahrzeugstandortes beim Fahrer abgefragt. Weiterhin wird mit dem Diagnosekanal geprüft, ob der Motor ausgeschaltet ist, das Fahrzeug steht und/oder ob die Feststellbremse angezogen ist; Fig.le. Sind diese Sicherungen ausgeführt, kann der Fahrer nach der Klärung, ob alle Datenpakete im Programm-Zwischenspeicher PCB sind und zu einem Flash-Container zusammengeführt worden sind mittels Rückprüfung der Checksumme über Telekommunikation - Fig. 1f - , nach Erhalt einer Freigabemeldung schließlich das Flashen einleiten. Das Laden der Datenpakete in den ZDS erfolgt über Telekommunikation im Hintergrund während das Fahrzeug fährt. Ist im Programm-Zwischenspeicher PCB kein neues Datenpaket enthalten, wird anhand der Checksumme der Parameter PP im Vergleich mit dem zentralen Datenspeicher ZDS überprüft, ob durch den Einbau eines neuen Steuergerätes an der Parametrierung des Fahrzeuges etwas geändert werden muß. Ist die Checksumme unverändert geblieben, wird der Flash-Mode beendet.

Vor dem Einleiten des Flashens - für den Fall, dass ein neuer Flash-Container im Programm-Pufferspeicher PCB enthalten istholt sich das entsprechende Steuergerät SG den neuen Flash-Container aus dem Programm-Pufferspeicher PCB ab und entpackt und/oder dekomprimiert ihn selbständig.

Die Programm-Routine überprüft anschließend, ob das Flashen erfolgreich war und ob in dem geänderten Steuergerät SG nach dem Flashen Fehler auftreten ; Fig.1g. Wenn alles Ok ist, kann der Nachlauf-Mode beendet und anschließend das Fahrzeug gestartet werden. Wenn auch dabei keine Fehler auftreten, wird das erfolgreiche Ende des Flash-Modes angezeigt und das alte Datenpaket des Steuergerätes SG aus Vorsichtsgründen erst nach ca. 100 Fahrkilometern gelöscht. Treten in dem geänderten SG Fehler auf, erfolgt auf dem Instrument eine Meldung "Werkstatt sofort aufsuchen oder Kundendienst mit Diagnoseassistent bestellen". Vom Kundendienst werden dabei mittels eines Diagnosegerätes die neuesten Parameter oder die neueste Software über eine Datenschnittstelle in das Grundmodul eingespielt.

Fig.1h zeigt den Ablauf des INS-Nachlauf-Modes. Die Programm Routine überprüft dabei, ob der Fahrzeug-Identitätscode Fz-IDdem Fachmann auch unter der Abkürzung "VIN" bekannt - des Grundmoduls GM oder des Spiegelspeichers geändert worden ist. Nach einer vom Fahrer bestätigten Kenntnisnahme einer Änderung werden dann entweder die Fahrzeugdaten vom Grundmodul zum ausgetauschten Spiegelspeicher übertragen, oder das ausgetauschte Grundmodul holt sich selbsttätig über den Diagnosebus die Fahrzeugdaten aus allen Steuergeräten SG.

Anschließend wird nach einer einleitenden Überprüfung der Fz-ID anhand der Produzenten-Sachnummern PRSN für Hardware und Software und anhand der Checksumme für die Parameter PP überprüft, ob sich an den Steuergeräten SG etwas geändert hat; Fig.1i. Liegt keine Änderung vor, wird der Nachlauf-Mode beendet; andernfalls geht die Routine wieder in den vorangehend beschriebenen Flash-Mode über.

Fig.1j zeigt einen Zweig der Programm-Routine für den Nachrüstfall, in dem ein bis dato unbekanntes Steuergerät SG eingebaut wird. Die Programm-Routine verzweigt in diesen Ablauf, wenn im Programmier-Mode für ein Steuergerät SG eine gegenüber dem zentralen Datenspeicher ZDS geänderte Checksumme für die Parameter PP festgestellt wird - Fig. 1f - und aktualisiert den Parametersatz des Fahrzeuges.

## Patentansprüche

1. Verfahren zur Abspeicherung von Daten in rechnergestützten Geräten von Verkehrsmitteln, wobei die Geräte einen Datenspeicher zur Abspeicherung von Betriebs-Software oder Fahrzeugdaten aufweisen und wobei in fertiggestellten und ausgelieferten Verkehrsmitteln beim Starten des Verkehrsmittels mittels einer in einem Grundmodul (GM) des Verkehrsmittels abgespeicherten Programm-Routine überprüft wird, ob sich bei den Geräten an der Hardware oder an der Software oder ob sich bezüglich der Verkehrsmitteldaten gegenüber dem Dateninhalt eines im Grundmodul (GM) enthaltenen zentralen Datenspeichers (ZDS) etwas geändert hat oder ob ein Datenpaket mit aktualisierter Betriebssoftware per Telekommunikation an das Grundmodul übersandt worden ist, und dass bei vorliegenden Änderungen oder Aktualisierungen die Programm-Routine den Dateninhalt der Datenspeicher mit dem Dateninhalt eines Datenpaketes flasht, und dass bei Registrieren einer Änderung eine Instrumentenmeldung erscheint, dass die Programm-routine mit dem Flash-Mode beginnt, nachdem der Fahrer abhängig von seiner Fahrsituation dem Flash-Mode zugestimmt hat und geklärt ist, ob das Fahrzeug mit Mitteln zur Telekommunikation ausgestattet ist, und dass eine aktuelle Verkehrsmittel-Ausstattungsliste per Telekommunikation über das Internet an einen dafür vom Werk vorgesehenen Provider gesendet wird und bei Kompatibilität vom Provider ein Datenpaket, das die Software und Firmware für das jeweilige Steuergerät (SG) in komprimierter Form enthält, an das Grundmoduls (GM) gesendet wird.

2. Verfahren zur Abspeicherung von Daten in rechnergestützten Geräten von Verkehrsmitteln, wobei die Geräte einen Datenspeicher zur Abspeicherung von Betriebs-Software und/oder Fahrzeugdaten aufweisen und wobei in fertig gestellten und ausgelieferten Verkehrsmitteln beim Starten des Verkehrsmittels mittels einer in einem Grundmodul (GM) des Verkehrsmittels abgespeicherten Programm-Routine überprüft wird, ob sich bei den Geräten an der Hardware oder an der Software oder ob sich bezüglich der Verkehrsmitteldaten gegenüber dem Dateninhalt eines im Grundmodul (GM) enthaltenen zentralen Datenspeichers (ZDS) etwas geändert hat oder ob ein Datenpaket mit aktualisierter Betriebssoftware per Telekommunikation an das Grundmodul übersandt worden ist, und dass bei vorliegenden Änderungen oder Aktualisierungen die Programm-Routine den Dateninhalt der Datenspeicher mit dem Dateninhalt eines Datenpaketes flasht, und dass die Programm-Routine beim Power On während des Startens des Fahrzeugs durch Vergleich überprüft, ob ein Zugriff vom Werk oder Kundendienst erfolgte, und wenn ein derartiger Eingriff erfolgt ist, dass dann entweder der komplette zentrale Datenspeicher (ZDS) oder ein Teil davon mit neuen Daten oder Parametern geladen wird, und dass die Programm-Routine nach dem Flashen eine Fehlerbehandlung durchführt oder eine Meldung an den Fahrer ausgibt.

3. Verfahren nach Anspruch 2, **dadurch gekennzeichnet, dass** das Flashen erfolgt, nachdem mit der Programm-Routine eine Kontrolle durchgeführt ist, ob das Fahrzeug für das Flashen auf einem sicheren Standort abgestellt ist.

4. Verfahren nach Anspruch 2, **dadurch gekennzeichnet, dass** die von der Programm-Routine kontrollierte Standortkontrolle vor dem Flashen ein im Fahrzeug vorhandenes Satellitennavigationssystem GPS einbezieht.

5. Verfahren nach einem der Ansprüche 1 bis 4, **dadurch gekennzeichnet, dass** der zentrale Datenspeicher (ZDS) durch mindestens einen im Fahrzeug außerhalb des Grundmodules (GM) angeordnete Spiegelspeicher ergänzt ist und dass die Programm-Routine anhand der Fahrzeug-Identitätscodes (FZ-ID) überprüft, ob der zentrale Datenspeicher (ZDS) oder einer der Spiegelspeicher nach der Fertigstellung des Fahrzeuges geändert worden ist.

6. Verfahren nach einem der Ansprüche 1 bis 5, **dadurch gekennzeichnet, dass** die Programm-Routine bei der Nachrüstung eines bis dato unbekannten Gerätes den Parametersatz des Fahrzeugs aktualisiert oder ihn via externer Kundendienstdatenbank über ein Diagnosegerät einliest.

7. Verfahren nach Anspruch 2, **dadurch gekennzeichnet, dass** die Programm-routine nach dem Flashen eine Fehlerbehandlung derart durchführt, dass bei auftretenden Fehlern die aktualisierten Datenspeicher auf den Zustand vor dem Flashen zurückgesetzt werden.

## Claims

1. Data storage method in computer-supported equipment of vehicles, such that the equipment comprises a data memory for storing operating software or vehicle data and such that in fully prepared and delivered vehicles, when the vehicle is started a program-routine stored in a basic module (GM) of the vehicle checks whether, in the hardware or software of the equipment or in relation to the vehicle data anything has changed compared with the data content of a central data store (ZDS) contained in the basic module (GM) or whether a data package with updated operating software has been sent by telecommunication to the basic module, and if changes or updates have taken place, the program-routine flashes the data content of the data store with the data content of a data package, and when a change is detected an instrument message appears, the program-routine initiates the flash mode after the driver has approved the flash mode depending on his driving situation and it is ascertained whether the vehicle is equipped with telecommunication means, and a current vehicle equipment list is sent by telecommunication via the Internet to a provider furnished for this purpose by the factory, and in the event of compatibility a data package containing the software and firmware for the respective control unit (SG) in compressed form is sent by the provider to the basic module (GM).

2. Data storage method in computer-supported equipment of vehicles, such that the equipment comprises a data memory for storing operating software or vehicle data and such that in fully prepared and delivered vehicles, when the vehicle is started a program-routine stored in a basic module (GM) of the vehicle checks whether, in the hardware or software of the equipment or in relation to the vehicle data anything has changed compared with the data content of a central data store (ZDS) contained in the basic module (GM) or whether a data package with updated operating software has been sent by telecommunication to the basic module, and if changes or updates have taken place, the program-routine flashes the data content of the data store with the data content of a data package, and when the power is on during the starting of the vehicle the program-routine checks by comparison whether any access by the factory or customer servicing has taken place, and if such intervention has occurred, then either the complete central data store (ZDS) or part thereof is loaded with new data or parameters, and after the flashing operation the program-routine implements an error treatment procedure or emits a message to the driver.

3. Method according to Claim 2, **characterised in that** the flashing takes place after the program-routine has checked that for the flashing, the vehicle has stopped in a safe location.

4. Method according to Claim 3, **characterised in that** the location check carried out by the program-routine before the flashing operation involves a GPS satellite navigation system present in the vehicle.

5. Method according to any of Claims 1 to 4, **characterised in that** the central data store (ZDS) is supplemented by at least one mirror memory arranged in the vehicle outside the basic module (GM) and, with reference to the vehicle's identity code (FZ-ID), the program-routine checks whether the central data store (ZDS) or one of the mirror memories has been changed since the preparation of the vehicle.

6. Method according to any of Claims 1 to 5, **characterised in that** if any equipment unknown until then is subsequently fitted to the vehicle, the program-routine updates the vehicle's set of parameters or reads one in from an external customer service databank via a diagnosis unit.

7. Method according to Claim 2, **characterised in that** after the flashing operation, the program-routine implements an error treatment procedure in such manner that if errors have occurred, the updated memory is restored to its condition before flashing.

## Revendications

1. Procédé pour le stockage de données dans des appareils assistés par ordinateur de moyens de transport, dans lequel les appareils présentent une mémoire de données pour la mémorisation de logiciel d'exploitation ou de données de véhicule et on vérifie dans des moyens de transport achevés et livrés, lors du démarrage du moyen de transport, au moyen d'une routine de programme mémorisée dans un module de base (GM) du moyen de transport si quelque chose a changé sur les appareils au niveau du hardware ou du software ou si quelque chose a changé en ce qui concerne les données de moyen de transport par rapport au contenu de données d'une mémoire de données centrale (ZDS) contenue dans le module de base (GM) ou si un paquet de données a été transmis avec un logiciel d'exploitation mis à jour par télécommunication au module de base, et **caractérisé en ce que**, dans le cas de présentes modifications ou mises à jour, la routine de programme flashe le contenu de données des mémoires de données avec le contenu de données d'un paquet de données, et **en ce qu'**un message d'instrument apparaît en cas d'enregistrement d'une modification, **en ce que** la routine de programme commence avec le mode flash une fois que le conducteur a approuvé le mode flash en fonction de sa situation de conduite et qu'on a vérifié que le véhicule est équipé de moyens pour la télécommunication, et **en ce qu'**une liste d'équipement en moyens de transport actualisée est envoyée par télécommunication via Internet à un fournisseur d'accès prévu à cet effet par l'usine et **en ce que**, en cas de compatibilité, le fournisseur d'accès envoie au module de base (GM) un paquet de données qui contient le logiciel et le micrologiciel pour l'appareil de commande (SG) respectif dans une forme comprimée.

2. Procédé pour la mémorisation de données dans des appareils assistés par ordinateur de moyens de transport, dans lequel les appareils présentent une mémoire de données pour la mémorisation de logiciel d'exploitation et/ou de données de véhicule et on vérifie dans les moyens de transport achevés et livrés, lors du démarrage du moyen de transport, au moyen d'une routine de programme mémorisée dans un module de base (GM) du moyen de transport si quelque chose a changé sur les appareils au niveau du hardware ou du software ou si quelque chose a changé en ce qui concerne les données de moyen de transport par rapport au contenu de données d'une mémoire de données centrale (ZDS) contenue dans le module de base ou si un paquet de données a été envoyé avec un logiciel d'exploitation mis à jour par télécommunication au module de base et **caractérisé en ce que**, dans le cas de présentes modifications ou mises à jour, la routine de programme flashe le contenu de données des mémoires de données avec le contenu de données d'un paquet de données, et **en ce que** la routine de programme vérifie lors du "Power On" pendant le démarrage du véhicule par comparaison si un accès à partir de l'usine ou du service clients a été effectué, et si une telle intervention a été effectuée, **en ce que** alors soit la mémoire de données centrale (ZDS) complète soit une partie de celle-ci est chargée avec de nouvelles données ou de nouveaux paramètres, et **en ce que** la routine de programme effectue un traitement d'erreur après le flashage ou envoie un message au conducteur.

3. Procédé selon la revendication 2, **caractérisé en ce que** le flashage intervient une fois qu'on a effectué un contrôle avec la routine de programme pour savoir si le véhicule est adapté pour le flashage à un emplacement sûr.

4. Procédé selon la revendication 2, **caractérisé en ce que** le contrôle de site vérifié par la routine de programme avant le flashage inclut un système de navigation par satellite GPS présent dans le véhicule.

5. Procédé selon l'une quelconque des revendications 1 à 4, **caractérisé en ce que** la mémoire de données centrale (ZDS) est complétée par au moins une mémoire d'image disposée dans le véhicule à l'extérieur du module de base (GM) et **en ce que** la routine de programme vérifie à l'aide des codes d'identité du véhicule (FZ-ID) si la mémoire de données centrale (ZDS) ou l'une des mémoires d'image a été modifiée après l'achèvement du véhicule.

6. Procédé selon l'une quelconque des revendications 1 à 5, **caractérisé en ce que** la routine de programme met à jour l'ensemble des paramètres du véhicule lors de l'équipement complémentaire d'un appareil non connu jusqu'à présent ou l'intègre via la banque de données externe du service clients par l'intermédiaire d'un appareil de diagnostic.

7. Procédé selon la revendication 2, **caractérisé en ce que** la routine de programme effectue après le flashage un traitement d'erreur de telle sorte que, en cas d'apparition d'erreurs, les mémoires de données actualisées sont remises à l'état antérieur au flashage.
